# NEW EUROPEAN PATENT SPECIFICATION

(11) **EP 1 650 697 B2**
(45) Date of publication and mention of the opposition decision: **13.01.2021**
(45) Mention of the grant of the patent: 16.12.2009
(21) Application number: 04077912.6
(22) Date of filing: 22.10.2004
(51) Int. Cl.: G06K 19/077, G09F 3/00

(54) **A method for applying a RFID tag carrying label on an object**
Verfahren zur Anbringung eines einen RFID-Tag enthaldenden Etiketts auf einem Objekt
Procédé pour déposer une étiquette comportant une RFID sur un objet

(43) Date of publication of application: 26.04.2006
(73) Proprietor: Sato Holdings Kabushiki Kaisha, Tokyo 153-0064 (JP)
(72) Inventor: Barczyk, Victor S., Lone Tree Colorado 80124 (US); Schwiers, Stefan, P.O. Box 78763, Dubai (AE); Horn, Klaus, 42113 Wuppertal (DE); Tomoyuki, Kumabayashi Kabushiki Kaisha Sato, Shibuya-ku Tokyo (JP); Masanori, Otsuka Kabushiki Kaisha Sato, Shibuya-ku Tokyo (JP)
(74) Representative: Grünecker Patent- und Rechtsanwälte PartG mbB

(56) References cited:
- EP-A1- 1 632 926
- WO-A1-00/54216
- DE-A1- 10 017 142
- US-A- 5 838 253

## Description

The present invention relates to a method for applying a RFID (Radio Frequency Identification) tag carrying label on an object, said tag comprising an antenna connected to an integrated circuit including a receiver and a transmitter according to the preamble of claim 1.

Such a method and object is already known from DE 100 17 142 A1.

Such a method is known and used for example for tracing, recognising and Identifying different objects such as beverages, blister packs, cartons, pallets etc. Generally the RFID tag is combined with a label creating a "smart" RFID label.

It should be noted that it is also known to use RFID tags as theft prevention on goods, in particular valuable goods such as clothes, bottles of whisky, etc. However these latter RFID tags are generally not connected to a memory provided for storing data related to the object, since the tag is generally only calibrated to a particular resonant frequency, provided to react and trigger an alarm signal when the object with the tag passes a gate where the resonant frequency is detected.

A drawback of the known method is that the tag or label is rigidly applied on the object. Depending on the composition or shape of the object on which the tag or label is affixed, the performance of the tag can be greatly impeded due to the nature of RFID and the laws of physics. In these cases, human intervention is generally required either for orienting the object or manually entering of the data, which would normally have been transmitted from the RFID tag. This human intervention increases the costs and chances of error, and slows down the whole identifying operation.

It is the object of the present invention to provide a method for applying a RFID tag carrying label, which enables an enhanced performance when data processing with the tag is requested, In particular reading and writing at greater distances.

The above and other objects of the invention are achieved by a method according to claim 1. Preferred embodiments are claimed in the dependent claims.

The fact that the tag is offset from the volume enclosed by the object and forms a freely extending protrusion, enables the application of a flexible label so that there is no longer a need to manipulate the object on which the label is applied. As there is no longer a need for manipulating the object, a faster processing is possible. Furthermore the use of a self-adhesive layer enables a fast and reliable application of the label.

According to the invention said tag is applied on a side of said label on which said self-adhesive layer is applied. Adhesion of the tag to the label is thus easily and quickly realised.

Moreover, according to the invention said protrusion is formed by a flap obtained by:
- determining on said label a stroke having a surface which is at least equal to the tag surface;
- applying said tag along and offset from said stroke;
- folding said stroke towards said tag; and
- applying said stroke over said tag in order to cover the latter.

By folding the stroke towards the tag and applying the stroke on the tag, the latter is covered and well protected.

Preferably said tag is applied on said label before the latter is applied on said object. The application of the label and the tag to the object is thus easier, as both are applied in a same operation.

The invention will now be described in more details with reference to the accompanying drawings showing a preferred embodiment of the method according to the invention.

In the drawings:
figure 1 shows an overall view of an object provided with the label affixed to the object;
figure 2 shows a label provided with the RFID tag in an unfolded manner;
figure 3 shows the label in a manner ready to be applied on to the object; and
figures 4 and 5 show schematically an embodiment of a device for applying the method according to the invention.

In the drawings a same reference number has been allotted to a same or analogous element.

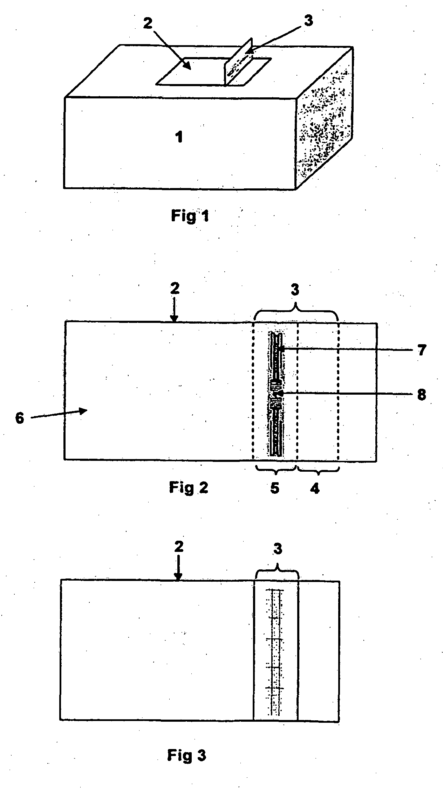

Figure 1 shows an object 1, such as for example a box, provided with a label 2. For the purpose of this invention, label does not infer that there will be any printing on the surface but merely a carrier of the RFID tag. The label is applied to the object offset from the volume taken by the object, in such a manner that it possesses a freely extending protrusion 3 with respect to that volume. The protrusion may extend in whatever direction with respect to the object. So it may extend parallel to the side of the face of the object on which it is applied or perpendicular thereto or make any other angle between 0° and 180° with this side.

In the example shown in figure 1, the object is formed by a box. It will however be clear that the object could be a pallet, a bottle, a table etc., i.e. any thing, which needs to be identified. The label can be affixed to any side or surface of the object.

The label is preferably made of a flexible material, such as paper or a plastic foil. As illustrated in figure 2, the label 2 according to the invention, is provided with a self-adhesive layer 6 applied on one side thereof. The self-adhesive layer 6 is preferably provided with a liner before application on the object. On the side where the self-adhesive layer is applied, there is also applied a RFID tag 7 comprising an antenna connected to an integrated circuit including a receiver, a transmitter, and preferably also a microprocessor 8. A memory, which could be part of the microprocessor, is also connected to the antenna. The memory is provided for storing data related to the object to be identified.

As is further illustrated in figure 2, the RFID tag 7 is applied on a field 5 which is along and offset of a stroke 4. The stroke 4 has a surface, which is at least equal to the surface covered by the tag. The stroke 4 is preferably chosen along a lateral border of the tag in such a manner that the stroke can easily be folded towards the field 5 where the RFID tag 7 is applied. Once the RFID tag 7 has been applied on the self-adhesive layer, the stroke 4 is folded towards the RFID tag and applied over it to cover the latter as shown in figure 3.

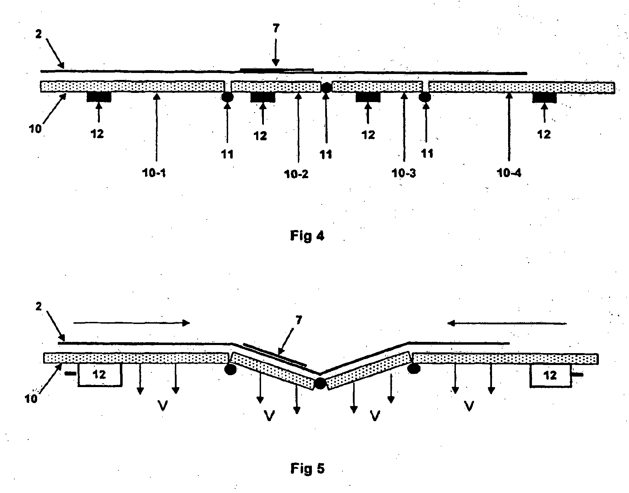

In order to apply the label with the RFID tag to the object, the label 2 is moved over a plate 10 as shown in figure 4. In order to keep the label with the tag 7 on the plate, the plate is provided with perforations beyond which a vacuum is applied. In such a manner, the label is sucked towards the plate 10. The plate is preferably made of steel since this enables a smooth surface over which the label can be transported.

The plate is divided in a plurality, for example four, parts (10-1, 10-2, 10-3 and 10-4). The successive parts are mounted together with hinges 11 in order to pivot among each other. Each part is preferably provided with a coating in order to apply a smooth sliding movement of the tags. Typically, pneumatic cylinders 12 are also connected to each part of the plate in order to impose a movement on the parts. However, the present invention is not limited to a pneumatic cylinder and any other means could drive the plate successfully. In such a manner a pivoting movement can be imposed on the part to let them pivot with respect to each other and create an angle among each other as shown in figure 5. A folding of the stroke towards the tag can thus be mechanically realised. The application of the tag on the object is further applied in a manner known per se.

## Claims

1. A method for applying a RFID (Radio Frequency Identification) tag (7) carrying label (2) on an object (1), said tag (7) comprising an antenna connected to an integrated circuit including a receiver and a transmitter, said label (2) being provided with a self-adhesive layer (6), said tag (7) being applied on said label (2), which label (2) is adhered to said object (1), in such a manner that the tag (7) is offset from a volume enclosed by said object (1) and forms a freely extending protrusion with respect to said volume, whereby said protrusion may extend parallel to the side of the face of the object (1) on which it is applied or perpendicular thereto or make any other angle between 0° and 180° with this side and said tag (7) is applied on a side of said label (2) on which said self-adhesive layer (6) is applied, wherein
said protrusion is formed by a flap obtained by :
- determining on said label (2) a stroke (4) having a surface which is at least equal to the tag surface;
- applying said tag (7) along and offset from said stroke (4);
- folding said stroke (4) towards said tag (7); and
- applying said stroke (4) over said tag (7) in order to cover the latter,
wherein the label (2) is moved over a plate (10), the plate (10) being provided with perforations beyond which a vacuum is applied to keep the label on the plate and the plate (10) being divided in a plurality of successive parts (10-1, 10-2, 10-3, 10-4), the successive parts are mounted together with hinges (11) in order to pivot among each other, and drive means are provided to impose a pivoting movement on the parts.

2. A method as claimed in claim 1, **characterized in that** said stroke (4) is determined in such a manner as to extend along a border of said label (2).

3. A method as claimed in claim 1 or 2, **characterized in that** said tag (7) is applied on said label (2) before the latter is applied on said object (1)

4. A method as claimed in anyone of the claims 1 to 3, **characterized in that** said label (2) is made of a flexible material, in particular paper.

## Patentansprüche

1. Verfahren zum Anbringen eines Aufklebers (2), der ein RFID (Radio Frequency Identification)-Etikett (7) trägt, an einem Objekt (1), wobei das Etikett (7) eine Antenne umfasst, die mit einer integrierten Schaltung verbunden ist, die einen Empfänger und einen Sender enthält, der Aufkleber (2) mit einer selbstklebenden Schicht (6) versehen ist, das Etikett (7) an dem Aufkleber (2) angebracht ist, der Aufkleber (2) so an dem Objekt (1) angeklebt wird, dass das Etikett (7) gegenüber einem Volumen versetzt ist, das von dem Objekt (1) umschlossen wird, und einen sich frei erstreckenden Vorsprung in Bezug auf das Volumen bildet, wobei sich der Vorsprung parallel zu der Seite der Fläche des Objekts (1), an der er angebracht ist, oder senkrecht dazu erstrecken kann oder jeden beliebigen anderen Winkel zwischen 0° und 180° zu dieser Seite bilden kann und das Etikett (7) an einer Seite des Aufklebers (2) angebracht wird, an der die selbstklebende Schicht (6) angebracht ist, wobei der Vorsprung durch eine Lasche gebildet wird, die erzeugt wird, indem:
- auf dem Aufkleber (2) ein Streifen (4) festgelegt wird, der eine Fläche hat, die der Fläche des Etiketts wenigstens gleich ist;
- das Etikett (7) entlang des Streifens (4) und zu ihm versetzt angebracht wird;
- der Streifen auf das Etikett (7) zu gefaltet wird; und
- der Streifen (4) über dem Etikett (7) so angebracht wird, dass er dieses abdeckt, wobei das Etikett (2) über eine Platte (10) bewegt wird, die Platte (10) mit Perforationen versehen ist, über die hinaus ein Vakuum angelegt wird, um das Etikett auf der Platte zu halten, und die Platte (10) in eine Vielzahl aufeinanderfolgender Teile (10-1, 10-2, 10-3, 10-4) unterteilt ist, die aufeinanderfolgenden Teile zusammen mit Scharnieren (11) angebracht sind, so dass sie zueinander geschwenkt werden können, und Antriebseinrichtungen vorhanden sind, die die Teile in eine Schwenkbewegung versetzen.

2. Verfahren nach Anspruch 1, **dadurch gekennzeichnet, dass** der Streifen (4) so festgelegt wird, dass er an einer Grenze des Aufklebers (2) entlang verläuft.

3. Verfahren nach Anspruch 1 oder 2, **dadurch gekennzeichnet, dass** das Etikett (7) an dem Aufkleber (2) angebracht wird, bevor letzterer an dem Objekt (1) angebracht wird.

4. Verfahren nach einem der Ansprüche 1 bis 3, **dadurch gekennzeichnet, dass** der Aufkleber (2) aus einem flexiblen Material, insbesondere Papier, besteht.

## Revendications

1. Procédé d'application d'une étiquette (7) d'identification par radiofréquence (RFID) portant un label (2) sur un objet (1), ladite étiquette (7) comprenant une antenne connectée à un circuit intégré comprenant un récepteur et un émetteur, ledit label (2) étant pourvu d'une couche auto-adhésive (6), ladite étiquette (7) étant appliquée sur ledit label (2), laquelle étiquette (2) est collée audit objet (1), de telle manière que l'étiquette (7) soit décalée par rapport à un volume délimité par ledit objet (1) et forme une saillie s'étendant librement par rapport audit volume, ladite saillie pouvant s'étendre parallèlement au côté de la face de l'objet (1) sur lequel elle est appliquée ou perpendiculairement à celui-ci ou faire tout autre angle compris entre 0° et 180° avec ce côté et ladite étiquette (7) étant appliquée sur un côté dudit label (2) sur lequel ladite couche auto-adhésive (6) est appliquée, **caractérisé en ce que**
ladite saillie est formée par un rabat obtenu en:
- déterminant sur ledit label (2) un lé (4) ayant une surface au moins égale à la surface de l'étiquette;
- appliquant ladite étiquette (7) le long et en décalage par rapport audit lé (4);
- pliant ledit lé (4) vers ladite étiquette (7); et
- appliquer ledit lé (4) sur ladite étiquette (7) afin de recouvrir cette dernière, dans lequel le label (2) est déplacé sur une plaque (10), la plaque (10) étant pourvue de perforations au-delà desquelles un vide est appliqué pour maintenir le label sur la plaque et la plaque (10) étant divisée en une pluralité de parties successives (10-1, 10-2, 10-3, 10-4), les parties successives sont montées ensemble avec des charnières (11) afin de pivoter entre elles, et des moyens d'entraînement sont prévus pour imposer un mouvement de pivotement sur les pièces.

2. Procédé selon la revendication 1, **caractérisé en ce que** ledit lé (4) est déterminé de manière à s'étendre le long d'une bordure dudit label (2).

3. Procédé selon les revendications 1 ou 2, **caractérisé en ce que** ladite étiquette (7) est appliquée sur ledit label (2) avant que cette dernière ne soit appliquée sur ledit objet (1).

4. Procédé selon l'une des revendications 1 à 3, **caractérisé en ce que** ledit label (2) est constitué d'un matériau flexible, en particulier du papier.
